Europäisches Patentamt

(19) European Patent Office

Office européen des brevets

(11) Publication number: **0 079 128**
**B1**

## (12) EUROPEAN PATENT SPECIFICATION

(45) Date of publication of patent specification: **07.01.87**

(51) Int. Cl.⁴: **H 02 P 9/30,** H 02 J 7/24

(21) Application number: **82305329.3**

(22) Date of filing: **07.10.82**

(54) **Regulator for a dynamo.**

(30) Priority: **20.10.81 GB 8131548**

(43) Date of publication of application:
**18.05.83 Bulletin 83/20**

(45) Publication of the grant of the patent:
**07.01.87 Bulletin 87/02**

(84) Designated Contracting States:
**DE FR GB IT**

(56) References cited:
**DE-A-2 351 149**
**GB-A-2 048 527**
**US-A-3 067 380**
**US-A-3 663 946**

(73) Proprietor: **LUCAS INDUSTRIES public limited company**
**Great King Street**
**Birmingham, B19 2XF West Midlands (GB)**

(72) Inventor: **Walker, Michael John**
**67 Dark Lane Romsley**
**Near Halesowen Worcestershire B62 0PL (GB)**

(74) Representative: **Prutton, Roger et al**
**MARKS & CLERK Alpha Tower Suffolk Street Queensway**
**Birmingham B1 1TT (GB)**

EP 0 079 128 B1

Courier Press, Leamington Spa, England.

## Description

This invention relates to a regulator for a dynamo and has as an object to provide a simple regulator which provides both voltage control and current limiting functions.

A regulator has been proposed in US—A— 3663946 in which two separate voltage comparators are used to compare two signals representing the output voltage of the dynamo and the current flowing from the dynamo with two different reference voltages, the outputs of these comparators being combined to control the field winding current. Such an arrangement regulates the output of the dynamo rather than the output of the regulator (which includes a series resistor) and moreover is a relatively complex circuit including two zener diodes to provide the two different reference voltages.

In accordance with the present invention there is provided a regulator comprising an input terminal for connection to a dynamo output, an output terminal for connection to a battery, a current sensing element connecting said input terminal to said output terminal, comparator means for comparing the current in said current sensing element and the voltage at one end thereof with respective reference levels, and an output stage connected to supply current to a field winding of the dynamo under control of said comparator means so as normally to control said voltage to a predetermined level, but being overridingly turned off to prevent the current in the current sensing element exceeding a predetermined level, characterised in that said comparator means comprises a single voltage comparator which receives as one input a single reference voltage derived from a reference voltage generator and as its other input, signals from first and second resistive potential dividers the voltages at the intermediate points of which depend on the voltage at the output terminal and the current in the current sensing means respectively, a diode being provided in the connection between the second potential divider and the comparator, so as to allow said other comparator input to be overridingly influenced by the current dependent signal.

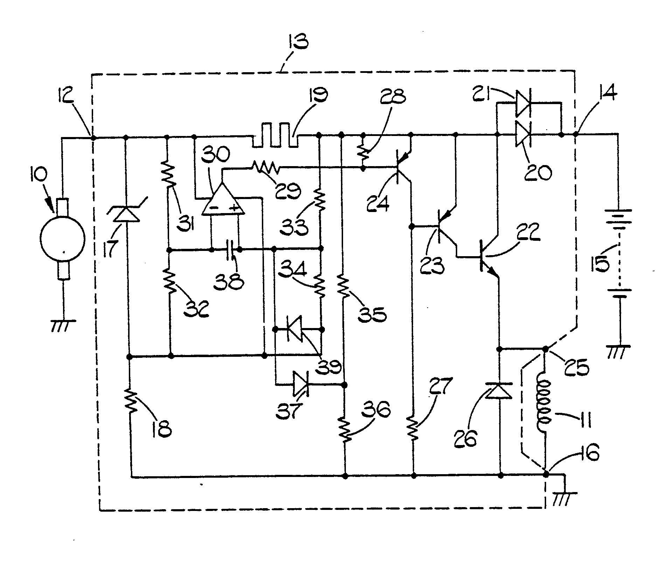

An example of the invention is shown in the accompanying drawing which is a circuit diagram showing the regulator incorporated in a dynamo type battery charging system for a motor vehicle.

The battery charging system shown includes a dynamo with an armature 10 and a field winding 11. One side of the armature is grounded and the other side is connected to the input terminal 12 of a regulator circuit 13. An output terminal 14 of the regulator circuit is connected to the positive terminal of a battery 15, the negative terminal of which is grounded.

The regulator 13 includes a reference voltage generating means in the form of a zener diode 17 having its cathode connected to the input terminal 12 and its anode connected via a resistor 18 to a ground terminal 16 of the regulator 13. A current sensing element 19 (which may be in form of a low ohmic value printed resistor) connects the input terminal 12 to the anodes of two parallel diodes 20, 21 which have their cathodes connected to the output terminal 14.

The regulator 13 has an output stage comprising three transistors 22, 23 and 24. The transistor 22, which is an npn power transistor, has its collector connected to the anodes of diodes 20, 21 and its emitter connected to a field terminal 25. A recirculation current diode 26 has its cathode connected to the emitter of the transistor 22 and its anode connected to the terminal 16. The transistor 23, which is a pnp transistor, has its collector connected to the base of the transistor 22 and its emitter connected to the anodes of diodes 20, 21. The transistor 24, which is also a pnp transistor, has its emitter connected to the anodes of diodes 20, 21, and its collector connected to the base of the transistor 23 and also connected by a resistor 27 to the terminal 16. The base of transistor 24 has its base connected to the common point of two resistors 28 and 29 which are connected in series between the anodes of the diodes 20, 21 and the output terminal of an integrated circuit operational amplifier 30.

The amplifier 30, which is connected to operate as a voltage comparator without any local feedback has its inverting input connected to the junction of two resistors 31, 32 connected in series with one another across the zener diode 17. Thus, in normal operation, the inverting input of amplifier 30 is maintained at a fixed voltage below the voltage at input terminal 12. The supply terminals of the amplifier 30 are connected respectively to the cathode and the anode of the zener diode 17.

A first resitive potential divider 33, 34 is connected between the anodes of the diodes 20, 21 and the anode of the zener diode 17. The junction of the resistors 33, 34 is connected to the non-inverting input of the amplifier 30. the values of the resistors 31 to 34 are so chosen that, in operation, but when only a small current is passing through the element 19, the voltage at the junction of the resistors 31, 32 is lower than that at the junction of the resistors 33 and 34.

A second resistive potential divider 35, 36 is connected between the anodes of the diodes 20, 21 and the terminal 16. This second divider also has its intermediate point connected to the non-inverting input of the amplifier 30, but in this case a diode 37 is included in the connection. This diode 37 has its anode connected to the non-inverting input of amplifier 30 and its cathode connected to the junction of the resistors 35, 36. Thus, if the voltage at the intermediate point of the second divider is lower than that at the intermediate point of the first divider, current can flow through the diode 37.

In use, at low current levels and when the voltage at the anodes of diodes 20, 21 is below a set level the voltage at the junction of resistors 35, 36 is not less than that at the junction of resistors 31, 32 by more than the forward breakdown voltage of the diode 37. Thus, the output of the amplifier is high, so that transistor 24 is off and transistors 23 and 22 are on. Increasing current in the field winding causes the voltage at the output of the dynamo to rise and the voltages at the junctions of resistors 31, 32 and 35, 36 both rise, that at the junction of resistors 31, 32 rising the more steeply. When the voltage at the anodes of diodes 20, 21 reaches the set level referred to, the output of the amplifier 30 goes low, turning on the transistor 24 and thereby turning off the transistors 23 and 22, The current in the field winding then starts to decay, whereupon the dynamo output voltage starts to fall again. A capacitor 38 connected between the inputs of the amplifier 30 prevents the voltage difference between its inputs changing too rapidly, so that transistor 22 is turned on and off at a predetermined frequency to maintain the voltage at the anodes of diodes at an average level equal to the set level referred. In addition the capacitor 38 stabilises the operational amplifier and makes the regulator immune to output ripple and brush noise.

If the current in element 19 is so great that the voltage at the junction of resistors 33, 34 falls below that at the junction of resistors 31, 32 the output of amplifier 30 goes low, whatever the voltage at the junction of resistors 35, 36 may be at that time. Thus an overriding current limit function is introduced.

The temperature characteristic of the regulator is determined by the values of resistors 31, 32, 35 and 36 and the temperature coefficients of the zener diode 17 and the diode 37.

To prevent damage to the operational amplifier 30 at start up, a further diode 39 has its anode connected to the anode of zener diode 17 and its cathode connected to the anode of diode 37. The diode 39 ensures that, when the volatage at terminal 12 is less than the zener voltage of zener diode 17, the voltage at the non-inverting input of amplifier 30 is not significantly less than the negative supply voltage of the amplifier 30 and also protects the operational amplifier from high voltage spikes in the dynamo output.

The configuration used for the output stage of the regulator provides reverse polarity protection provided the $V_{BER}$ of the output transistor is greater than the open circuit battery voltage.

## Claims

1. A regulator for a dynamo (10, 11) comprising an input terminal (12) for connection to a dynamo output, an output terminal (14) for connection to a battery (15), a current sensing element (19) connecting said input terminal to said output terminal, comparator means (30) for comparing the current in said current sensing element and the voltage at one end thereof with respective reference levels, and an output stage (22, 23, 24) connected to supply current to a field winding (11) of the dynamo under the control of said comparator means so as normally to control said voltage to a predetermined level, but being overridingly turned off to prevent the current in the current sensing element exceeding a predetermined level, characterised in that said comparator means comprises a single voltage comparator (30) which receives as one input a single reference voltage derived from a reference voltage generator (17, 18, 31, 32) and as its other input, signals from first and second resistive potential dividers (33, 34 and 35, 36) the voltages at the intermediate points of which depend on the voltage at the output terminal and the current in the current sensing means respectively, a diode (37) being provided in the connection between the second potential divider (35, 36) and the comparator, so as to allow said other comparator input to be overridingly influenced by the current dependent signal.

2. A regulator as claimed in Claim 1, in which the reference voltage generating means comprises a zener diode (17) and a resistor (18) connected in series across the input terminal and ground and a third resistive potential divider (31, 32) connected across the zener diode.

3. A regulator as claimed in Claim 2, in which said first potential divider (33, 34) is connected between the output terminal end of the current sensing element (19) and the junction of the zener diode (17) with said resistor (18).

4. A regulator as claimed in Claim 2 or Claim 3, in which the second potential divider (35, 36) is connected between the output terminal end of the current sensing element (19) and ground.

5. A regulator as claimed in any preceding claim in which the comparator (30) has a capacitor (38) connected between its input terminals.

## Patentansprüche

1. Regeleinrichtung für eine Dynamo-Maschine (10, 11) mit einem Eingangsanschluß (12) zum Verbinden mit einem Dynamo-Ausgang, einem Ausgangsanschluß (14) zum Verbinden mit einer Batterie (15), einem den Eingangsanschluß mit dem Ausgangsanschluß verbindenden Stromnachweiselement (19), einer Vergleichseinrichtung (30) zum Vergleichen des Stromes in dem Stromnachweiselement und der Spannung an einem Ende davon mit entsprechenden Referenzpegeln, und einer Ausgangsstufe (22, 23, 24), die angeschlossen ist zum Stromzuführen zu einer Feldspule (11) der durch die Regeleinrichtung geregelten Dynamo-Maschine so, daß normalerweise die Spannung auf einen vorbestimmten Pegel geregelt wird, die aber übersteuernd abgeschaltet wird zum Verhindern, daß der Strom im Stromnachweiselement einen vorbestimmten Pegel überschreitet, dadurch gekennzeichnet, daß die Vergleichseinrichtung einen einzelnen Spannungsvergleicher (30) aufweist, der als einen Eingang eine von einem Referenzspannungsgenerator (17, 18, 31, 32) abgeleitete Referenzspannung und als seinen anderen Eingang Signale von einem ersten und zweiten Widerstandsspannungsteiler (33, 34 und 35, 36) erhält, wobei die Spannung an deren mittleren Punkten von der Spannung an dem Ausgangsanschluß und entsprechend von dem Strom in dem Stromnachweiselement abhängt, und eine Diode (37) in der Verbindung zwischen dem zweiten Spannungsteiler (35, 36) und dem Vergleicher so vorgesehen ist, daß der andere Vergleichereingang übersteuernd durch das stromabhängige Signal beeinflußt werden kann.

2. Regeleinrichtung nach Anspruch 1, in der die Generatoreinrichtung für die Referenzspannung eine Zenerdiode (17) und einen Widerstand (18), die in Serie über den Eingangsanschluß und Masse geschaltet sind, und einen dritten Widerstandsspannungsteiler (31, 32) aufweist, die über die Zenerdiode verbunden sind.

3. Regeleinrichtung nach Anspruch 2, in der der erste Spannungsteiler (33, 34) zwischen dem Ausgangsanschlußende des Stromnachweiselementes (19) und der Verbindung der Zenerdiode (17) mit dem Widerstand (18) geschaltet ist.

4. Regeleinrichtung nach Anspruch 2 oder 3, in der der zweite Spannungsteiler (35, 36) zwischen dem Ausgangsanschlußende des Stromnachweiselementes (19) und Masse geschaltet ist.

5. Regeleinrichtung nach einem der Ansprüche 1 bis 4, in dem der Vergleicher (30) einen zwischen seinen Eingangsanschlüssen geschalteten Kondensator (38) aufweist.

**Revendications**

1. Régulateur pour une dynamo (10, 11) comprenant une borne d'entrée (12) à raccorder à la sortie d'une dynamo, une borne de sortie (14) à raccorder à une batterie (15), un élément détecteur de courant (19) reliant la borne d'entrée à la borne de sortie, un dispositif comparateur (30) pour comparer l'intensité du courant dans l'élément détecteur du courant et la tension à une extrémité de celui-ci avec des niveaux de référence respectifs, de même qu'un étage de sortie (22, 23, 24) qui est monté pour fournir du courant à un enroulement inducteur (11) de la dynamo, sous la commande du dispositif comparateur, de manière que, normalement, ladite tension soit réglée à un niveau prédéterminé, mais qui est coupé prioritairement pour empêcher l'intensité dans l'enroulement détecteur de courant de dépasser un niveau prédéterminé, caractérisé en ce que le dispositif comparateur est formé par un seul comparateur de tensions (30), qui reçoit sur une entrée une tension de référence unique tirée d'un générateur de tension de référence (17, 18, 31, 32) et, sur son autre entrée, des signaux d'un premier et d'un second diviseur de tension résistifs (33, 34 et 35, 36) dont les tensions aux prises intermédiaires dépendent de la tension sur la borne de sortie respectivement de l'intensité dans l'élément détecteur de courant, une diode (37) étant prévue dans la liaison entre le second diviseur de tension et la comparateur, de manière à permettre au signal fonction de l'intensité d'agir prioritairement sur ladite autre entrée du comparateur.

2. Régulateur selon la revendication 1, dans lequel le dispositif générateur de tension de référence comprend une diode Zener (17) et une résistance (18) montées en série entre la borne d'entrée et la masse, ainsi qu'un troisième diviseur de tension résistif (31, 32) monté aux bornes de la diode Zener.

3. Régulateur selon la revendication 2, dans lequel le premier diviseur de tension (33, 34) est monté entre l'extrémité côté borne de sortie de l'élément détecteur de courant (19) et la jonction de la diode Zener (17) avec ladite résistance (18).

4. Régulateur selon la revendication 2 ou 3, dans lequel le second diviseur de tension (35, 36) est monté entre l'extrémité côté borne de sortie de l'élément détecteur de courant (19) et la masse.

5. Régulateur selon l'une quelconque des revendications précédentes, dans lequel un condensateur (38) est monté entre les bornes d'entrée du comparateur (30).